# EUROPEAN PATENT APPLICATION

(11) **EP 4 353 534 A1**
(43) Date of publication of application: **17.04.2024**
(21) Application number: 23203912.3
(22) Date of filing: 16.10.2023
(51) Int. Cl.: B60N 3/00, B60R 11/00

(54) **SYSTEMS, METHODS, AND DEVICES FOR SEAT TRAYS**

(30) Priority: 16.10.2022 US 202263379770 P
(71) Applicant: Fisker Inc., Manhattan Beach, CA 90266 (US)
(72) Inventor: ROGER, Marline, Manhattan Beach, CA 90266 (US); ARNAOUT, Nadya, Manhattan Beach, CA 90266 (US); SAGLIMBENE, Peter, Manhattan Beach, CA 90266 (US); HALONEN, Stephen, Manhattan Beach, CA 90266 (US)
(74) Representative: Bartholomew, Anna

(57) **Abstract**

Disclosed embodiments for trays (101, 301) in a vehicle (200) including trays for passenger and driver sides of an automobile. A tray consistent with disclosed embodiments may be stored in a console (150) and extend from the console to be used by a driver when parked for activities such as working on a laptop, eating, or the like. A tray consistent with disclosed embodiments may be stored in a dash and extend from the dash to be used by a passenger. An automobile may be configured to remain in parked if a tray is in an extended position. A tray may be configured to be locked when a vehicle is in a drive or mobile state.

## Description

### TECHNICAL FIELD

The present disclosure generally relates to vehicles including trays accessible to seat occupants.

### BACKGROUND

Trays are currently available in limited capacities in vehicles. Passengers typically carry large trays that can be placed over a passenger's lap and these trays must be carried separately from vehicle to vehicle and can be difficult to use in a small space. Drivers or operators typically do not have access to a tray to have an eating table or a working table while parked. Space is at a premium in vehicles, and it is currently difficult to use a carry tray in a vehicle.

In airplanes, other types of trays are available for passengers that can fold down from a bulkhead or seat back in front of the passenger. But these trays are not designed for use in automobile with different space constraints. Still other trays may extend from a console. Such trays extending from consoles may be difficult to use and non-intuitive. Further, such trays are not designed for use with an automobile for a driver, because the driver is expected to monitor or operate the vehicle.

Improved trays may be designed to integrate with existing vehicle structures so as to not be cumbersome and to be readily accessible for a passenger or operator. Improved trays may provide space for a passenger or operator to eat, work, read, or similar. Improved trays may be integrated with a vehicle so as to prevent a driver from moving the vehicle while trays are deployed.

### SUMMARY

Disclosed embodiments provide devices and methods for console trays and/or extendable trays and related vehicle control systems.

Disclosed embodiments for trays in a vehicle including trays for passenger and driver sides of an automobile. A tray consistent with disclosed embodiments may be stored in a console and extend from the console to be used by a driver when parked for activities such as working on a laptop, eating, or the like. A tray consistent with disclosed embodiments may be stored in a dash and extend from the dash to be used by a passenger. An automobile may be configured to remain in parked if a tray is in an extended position. A tray may be configured to be latched or locked when a vehicle is in a drive or mobile state.

Disclosed embodiments include a tray assembly for a vehicle comprising a vertical support; a horizontal support connected to the vertical support and configured to extend from the vertical support; and a tray attached to the horizontal support, wherein the tray is storable in a console next to a seat and the tray is configured to be extended to a position in front of the seat. In some embodiments, the tray may be configured to be expandable. In some embodiments, the tray assembly may be part of an automobile and is configured to be disposed in the console disposed between a passenger seat and a driver seat. In some embodiments, the automobile is configured to sense if the tray assembly is stored or extended, and the automobile is configured to lock a park state of a vehicle based if the tray assembly is extended. In some embodiments, the tray may swivel relative to the horizontal support.

Disclosed embodiments include a dash; a slide comprising a fixed portion and an extendable portion configured to extend from the dash; a tray stored within the dash and configured to be extendable from the dash with the extendable portion of the slide; and a latch configured to secure the tray in a stored state. In some embodiments, the tray may be configured to be expandable. In some embodiments, the tray assembly is part of an automobile and is configured to be disposed in the dash in front of a passenger seat. In some embodiments, the automobile is configured to sense if the tray assembly is stored or extended, and the automobile is configured to lock a park state of a vehicle based if the tray assembly is extended.

### BRIEF DESCRIPTION OF THE DRAWINGS

The accompanying drawings, which are incorporated in and constitute a part of this specification, illustrate several examples, and, together with the description, serve to explain the disclosed principles. In the drawings:
FIGS. 1A-1D are views of a tray in a stored or partially stored configuration, consistent with disclosed embodiments;
FIGS. 2A-2D are views of a tray in an extended or deployed configuration, consistent with disclosed embodiments;
FIG. 2E is a view of a vehicle having a tray in an extended or deployed configuration, consistent with disclosed embodiments;
FIGS. 3A-3C are views of a tray in a stored configuration, consistent with disclosed embodiments;
FIGS. 4A-4D are views of a tray in an extended or deployed configuration, consistent with disclosed embodiments;
FIG. 4E is a view of a vehicle having a tray in an extended or deployed configuration, consistent with disclosed embodiments.

### DETAILED DESCRIPTION

Reference will now be made in detail to exemplary embodiments, examples of which are illustrated in the accompanying drawings and disclosed herein. Wherever convenient, the same reference numbers will be used throughout the drawings to refer to the same or like parts. For ease of discussion, the present disclosure may describe embodiments in the context of trays for a vehicle. It is to be understood, however, that disclosed embodiments are not limited to automotive applications and could be used in boats, airplanes, trains, or other modes of transportation or in other applications such as desks. Rather, the disclosed devices and methods are applicable to vehicle trays and for many other purposes and, in fact, are not limited to any particular industry or field.

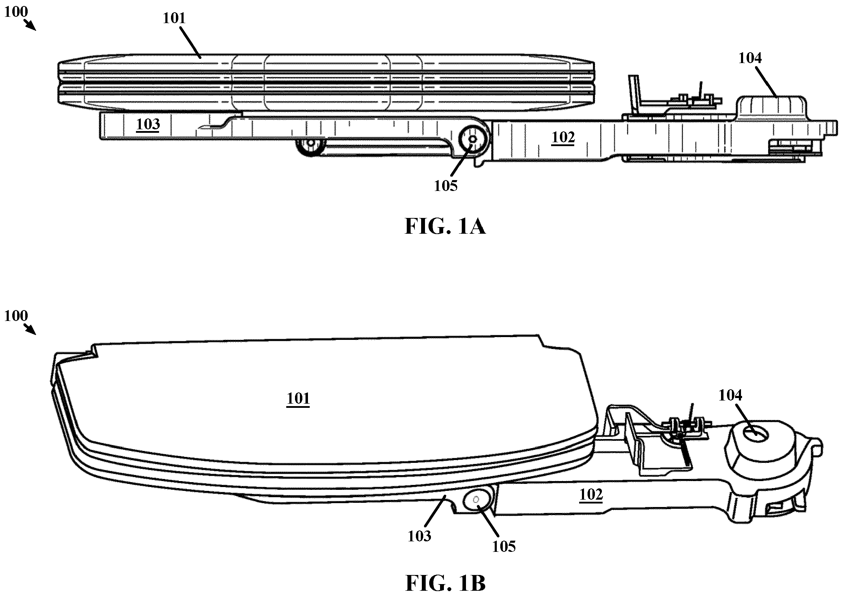

FIGS. 1A-1D are views of tray apparatus 100 in a stored or partially stored configuration, consistent with disclosed embodiments. Tray apparatus 100 includes tray 101, support 102, and support 103. Tray 101, support 102, and support 103 may be manufactured out of metal, plastic, composite, or some other type of material - including combinations thereof. The components and arrangements shown in FIGS. IA- ID are not intended to limit the disclosed examples, as the components used to implement the disclosed processes and features may vary.

FIGS. 1A-1B show how tray 101 may be stored substantially parallel to the lengths of support 102 and support 103. When tray apparatus 100 is in an extended or deployed position, support 102 may become a vertical support extending from a console, and support 103 may become a horizontal support perpendicular to the vertical support from the console. Tray apparatus 100 may be rotatable around pivot 104 at a first end of support 102. Support 103 may be rotatable around pivot 105 at a second end of support 102. Tray 101 may swivel relative to support 103 while remaining parallel to support 103. Tray 101 may be expandable relative to when tray 101 is in a stored position. For example, tray 101 may be unfolded from a stored position so that two halves of tray 101 can provide a larger surface area.

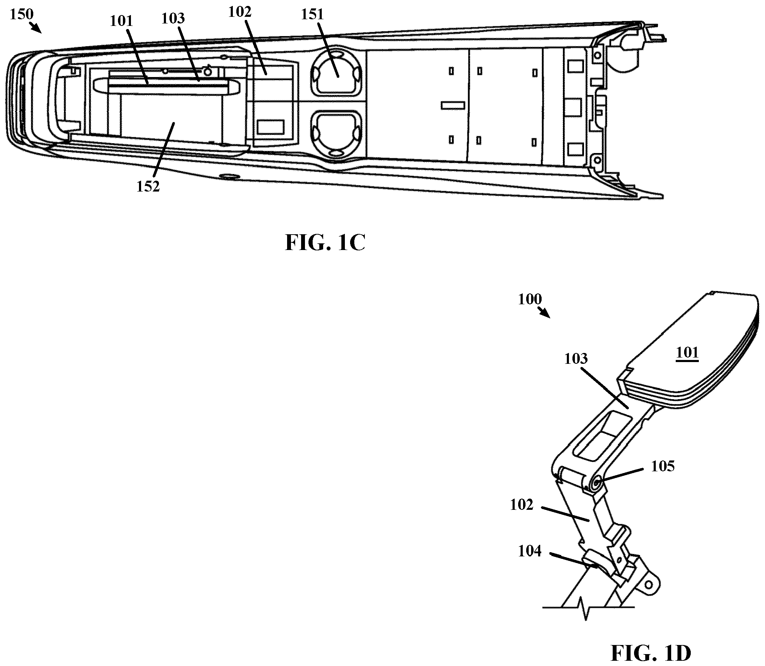

FIG. 1C shows a view from above of console apparatus 150 into which tray apparatus 100 may store and from which tray apparatus 100 may extend. In FIG. 1C tray apparatus 100 is in its stored position. Console apparatus 150 includes cup holders 151 and storage compartment 152. Although not shown, console apparatus 150 may be flanked by a seat on one or both sides. Tray apparatus 100 may be configured to extend over a seat for the passenger in that seat to use the surface area provided by tray 101. Tray apparatus 100 may only take up a portion of storage compartment 152 when stored or may take up all of the space of storage compartment 152. Tray apparatus 100 may be secured within storage compartment 152 through indents, a latch, or some other holding mechanism. In an example, the latch may be released to enable tray apparatus 100 to be deployed. Similarly, tray apparatus 100 may be secured in a deployed configuration though indents, a latch, or some other holding mechanism. Console apparatus 150 may include a sensor to determine if tray apparatus 100 is in the stored position. A vehicle may be in electronic communication with the sensor. The vehicle may be configured to remain in a parked mode when the tray is in an extended position and not stored. The vehicle may be configured to alert a driver when the tray is in an extended position and not stored. The sensor may be a force sensor, a position sensor, a pressure sensor, or an infrared sensor. The vehicle may include a lock that engages when the vehicle is in a mobile state (e.g., drive mode, reverse, sport, or similar). A processor may be configured to receive the sensor information and determine a state of a vehicle or one or more alerts based on the sensor. The processor may be connected to a computer-readable medium with one or more instructions or programs.

FIG. 1D shows tray apparatus 100 in a partially deployed or extended state. Tray 101 may be attached to support 103. Tray 101 may be foldable. Tray 101 may be used in a folded state or may be unfolded to the fully deployed or extended state.

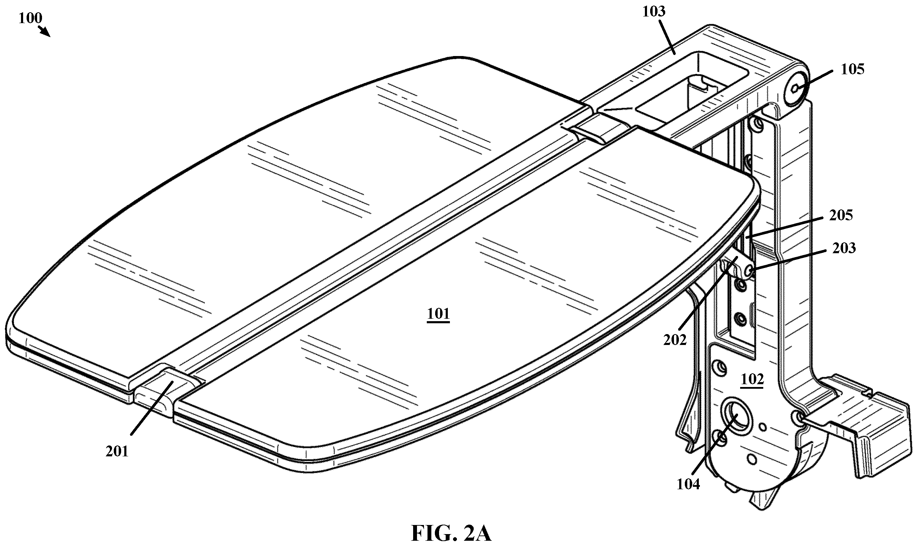

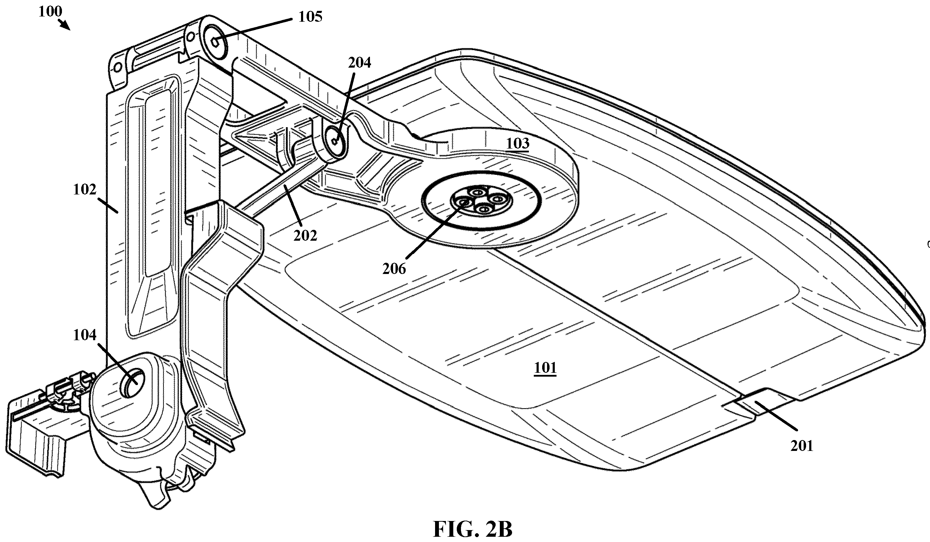

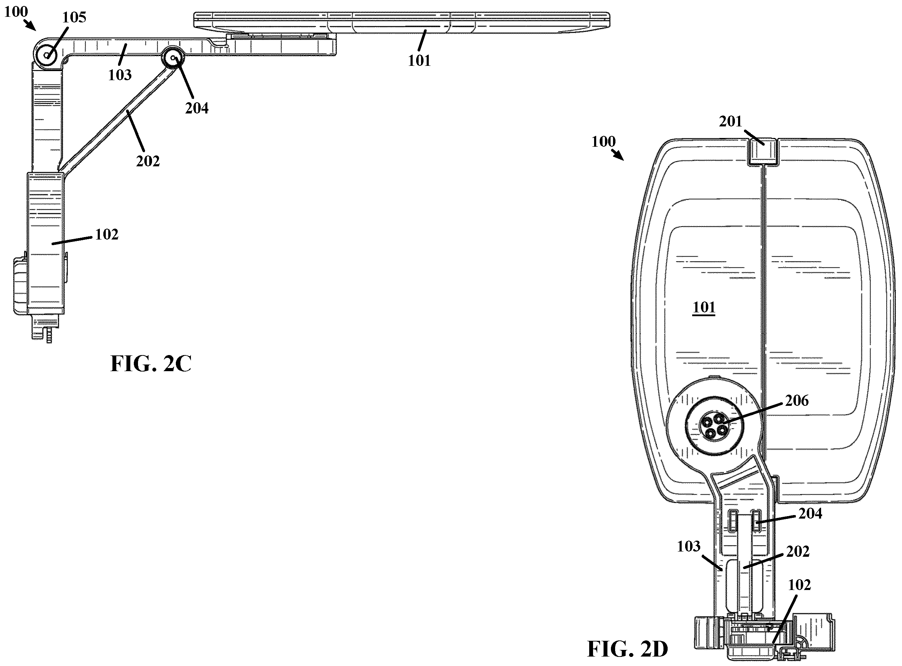

FIGS. 2A-2D are views of tray apparatus 100 in an extended or deployed configuration, consistent with disclosed embodiments. In the extended or deployed configuration, two halves of tray 101 are folded open at hinge 201. Support 102 has rotated around pivot 104 to a position substantially vertical from the stored configuration. Support 103 has rotated around pivot 105 to a position substantially perpendicular to support 102. The components and arrangements shown in FIGS. 2A- 2D are not intended to limit the disclosed examples, as the components used to implement the disclosed processes and features may vary.

Tray apparatus 100 may include support 202 extending from support 103 to support 102. Support 103 may be locked in an extended position through a latch, an indent, or by placement of support 202 to prevent rotation of support 103 relative to support 102. Support 202 may include pivot 203 and pivot 204 at the ends. In some examples, allowing support 103 to rotate around pivot 105 causes pivot 203 of support 202 to move within channel 205. Tray apparatus 100 may include pivot 206 at the connection point between tray 101 and support 103. Pivot 206 may enable tray 101 to swivel while remaining parallel to support 103.

Tray apparatus 100 may include one or more springs configured to bias tray apparatus 100 in a stored position or an extended position.

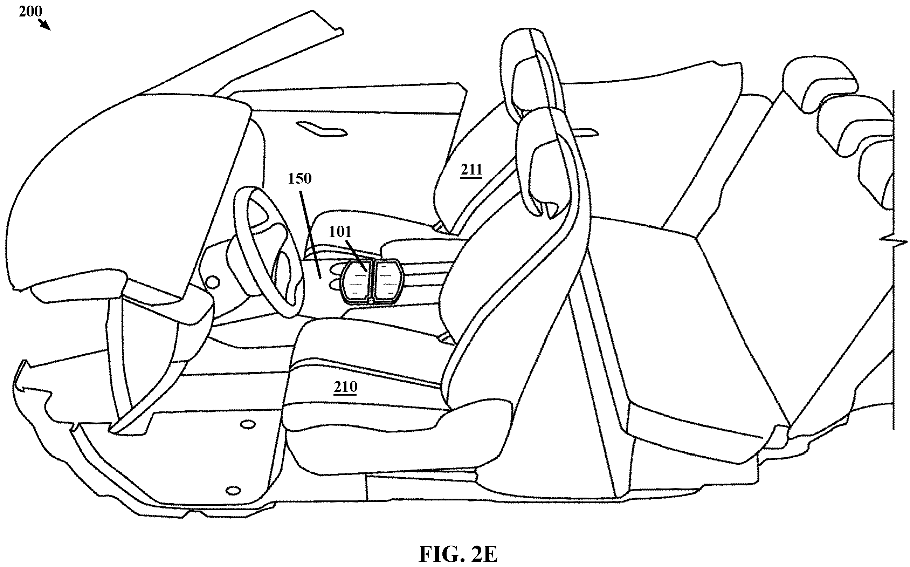

FIG. 2E shows vehicle 200 when tray apparatus 100 in its extended orientation from a center console therein. Tray 101 extends over driver seat 210 such that tray 101 will be at least partially over the lap of a person who may be seated in driver seat 210. In some examples, tray apparatus 100 may be mirrored such that tray 101 extends over passenger seat 211 instead. Tray 101 may be used as shown in an unfolded orientation or may remain folded (e.g., when less surface area is desired/needed from tray 101). Tray 101 may rotate around pivot 206 to adjust how far tray 101 extends over driver seat 210.

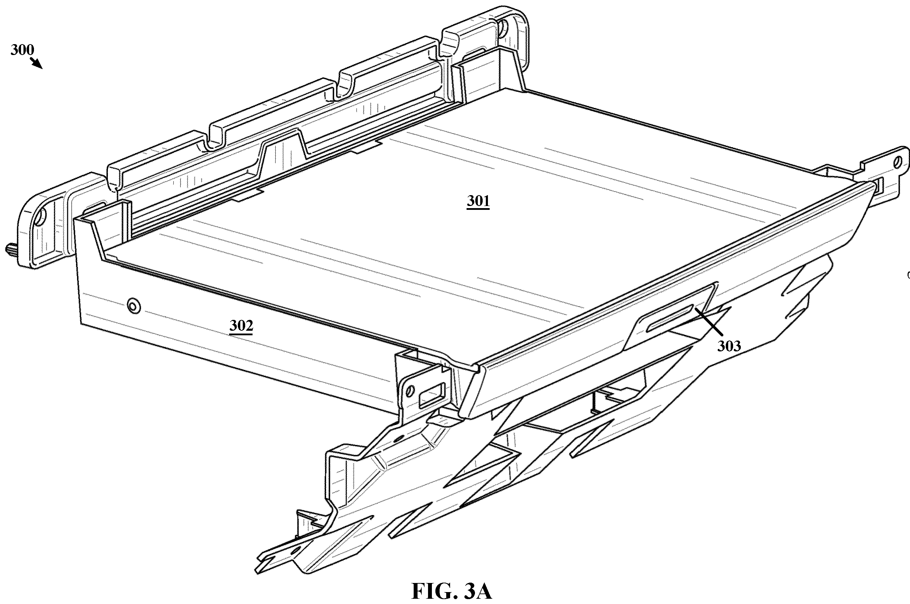

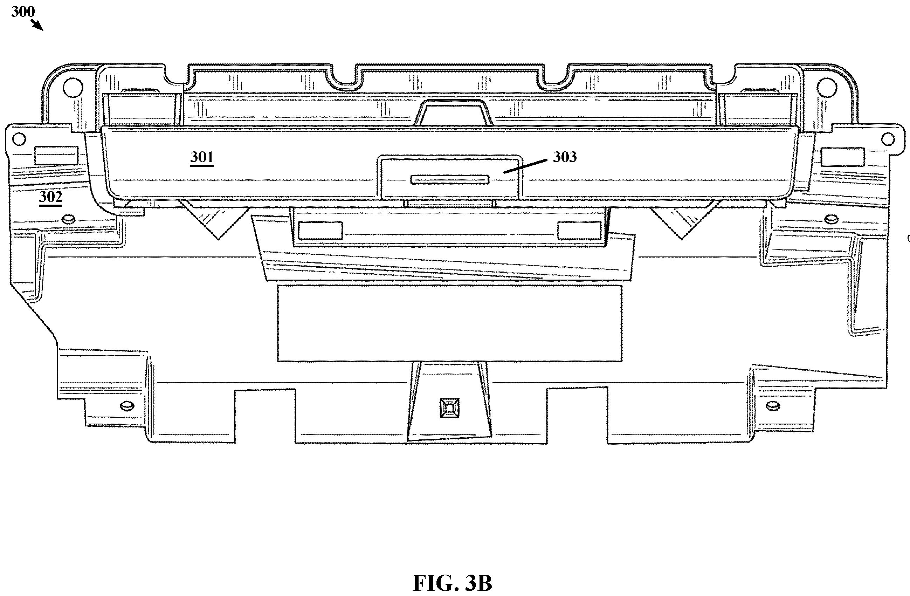

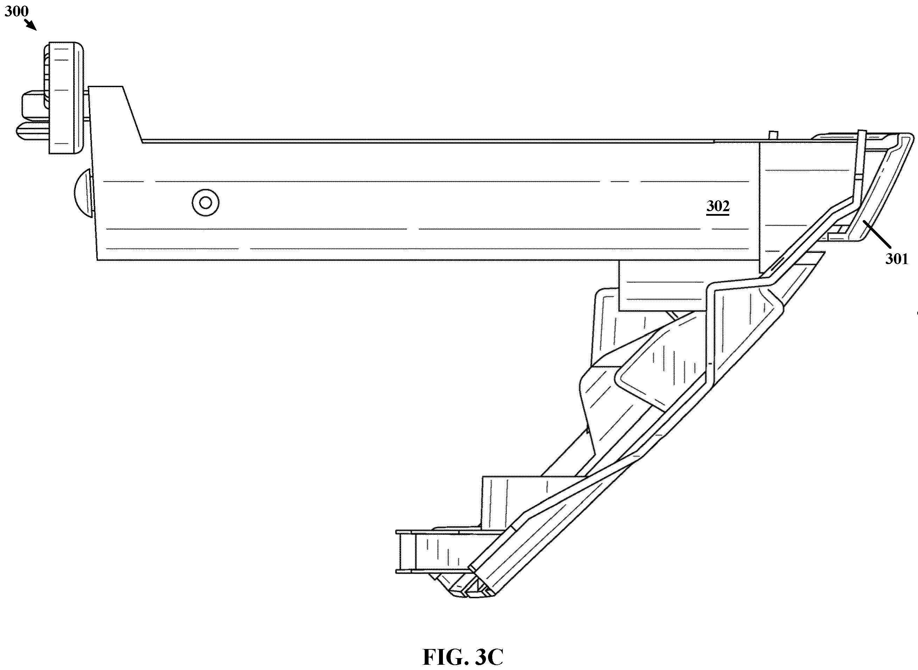

FIGS. 3A-3C are views of tray apparatus 300 in a stored configuration, consistent with disclosed embodiments. Tray apparatus 300 includes tray 301 and frame 302 into which tray 301 is installed. Frame 302 may be a part of a dash for a vehicle. Frame 302 may be affixed to the dash using screws, rivets, or some other type of fastener - including combinations thereof. Tray 301 may be manufactured out of metal, plastic, composite, or some other type of material - including combinations thereof. The components and arrangements shown in FIGS. 3A-3C are not intended to limit the disclosed examples, as the components used to implement the disclosed processes and features may vary.

Tray apparatus 300 may include a latch to keep tray 301 in position inside a dash. Tray 301 may be fit within a profile of a dash so as to not extend beyond the dash and into an automobile cabin when stored. Latch release 303 may be pressed by a user to release the latch to enable movement of tray 301 from the stored configuration. Other types of latch releases may also be used, such as a latch release that is pull activated rather than push activated like latch release 303.

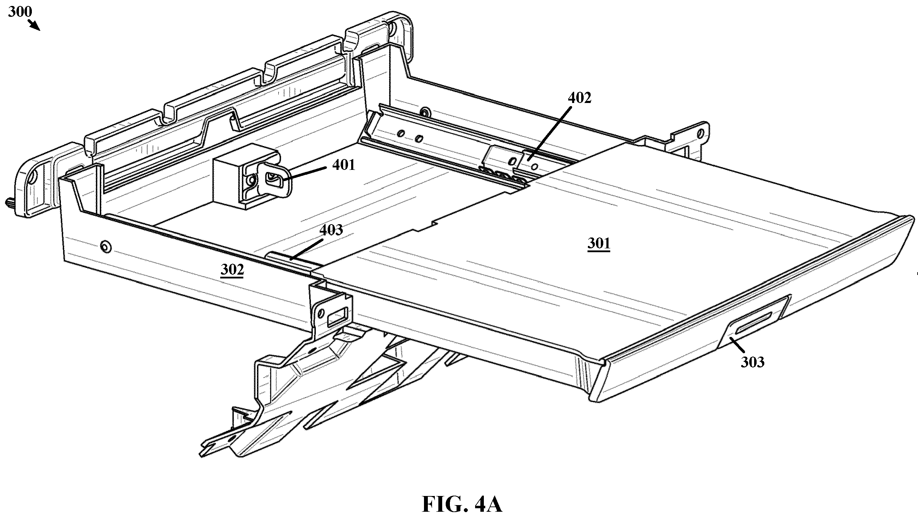

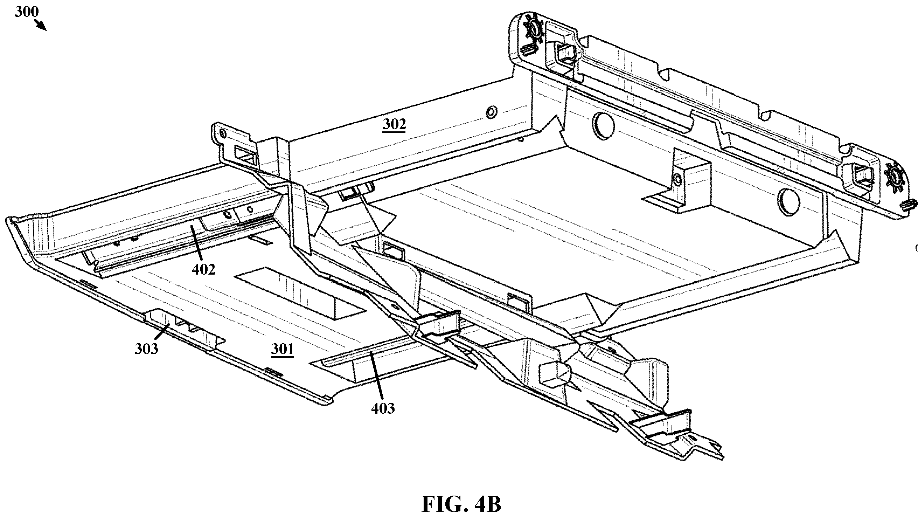

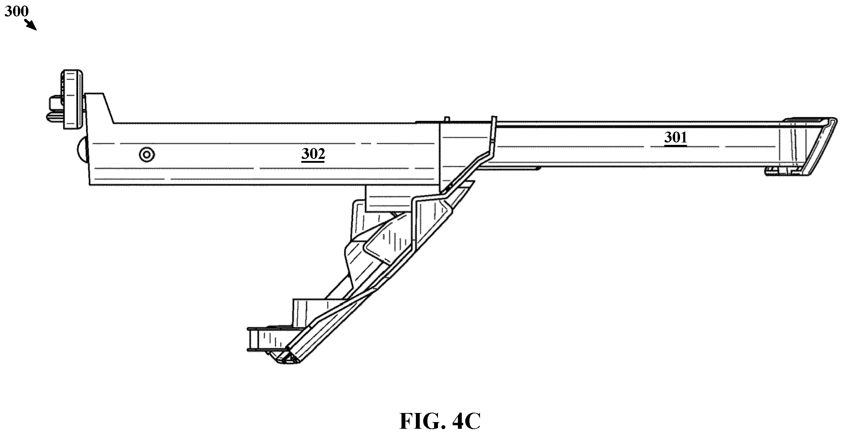

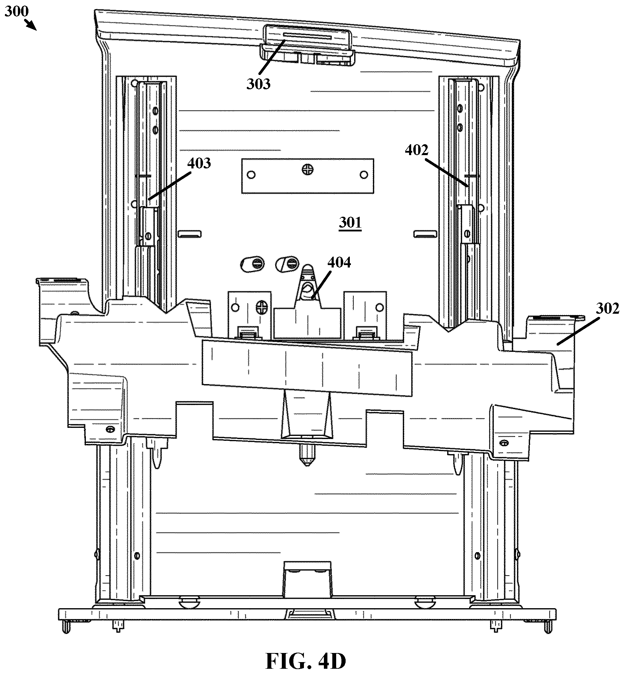

FIGS. 4A-4D are views of tray apparatus 300 in an extended or deployed configuration, consistent with disclosed embodiments. The components and arrangements shown in FIGS. 4A- 4E are not intended to limit the disclosed examples, as the components used to implement the disclosed processes and features may vary.

In the extended configuration, slide 402 and slide 403 can be seen attached to frame 302 and tray 301. Slide 402 and slide 403 may include bearings, guides, tracks, and/or some other mechanism for allowing tray 301 to move outward from the stored configuration. Slide 402 and slide 403 may be manufactured out of metal, plastic, composite, or some other type of material - including combinations thereof. Slide 402 and slide 403 each include a component attached to frame 302 and a component attached to tray 301. The two components move relative to one another in a manner guided by an interface between the components (e.g., one component may fit within the other).

In some examples, slide 402 and slide 403 may include indents, or another mechanism, that helps tray 301 to remain in a non-fully extended configuration (e.g., halfway out) should less than all of the surface area of tray 301 be wanted by a user. Mechanisms external to slide 402 and slide 403 may also be used to achieve a similar result. Latch anchor 401 is attached to frame 302 and is grasped by latch 404 when tray 301 is in the stored configuration. When latch release 303 is pressed by a user, a linkage (not shown) between latch release 303 and latch 404 causes latch 404 to release latch anchor 401 enabling tray 301 to be moved out of the stored configuration.

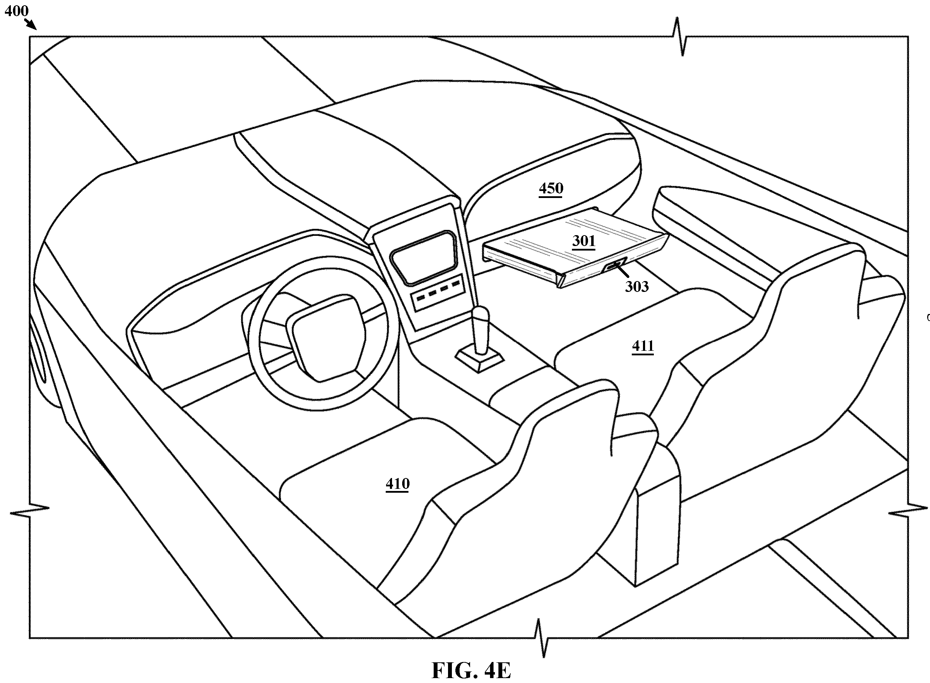

FIG. 4E shows vehicle 400 with tray apparatus 300 in its extended orientation from dash 450 therein. Tray 301 is extended towards passenger seat 411. Preferably, tray 301 is high enough relative to the base of passenger seat 411 that the legs of a passenger can still fit under tray 301 when extended. In some examples, vehicle 400 may also include tray apparatus 100, which provides a surface to a passenger in driver seat 410 while tray 301 provides a surface to a passenger in passenger seat 411.

The tray may include one or more rails or slides. The tray may include a fixed slide that is disposed within a dash. The tray may include a movable slide portion that moves related to the fixed slide to allow the tray to extend. The tray may be disposed on a passenger side of an automobile. The tray may be hollow to save weight.

Moreover, while illustrative embodiments have been described herein, the scope includes any and all embodiments having equivalent elements, modifications, omissions, combinations (e.g., of aspect across various embodiments), adaptions or alterations based on the present disclosure. The elements in the claims are to be interpreted broadly based on the language employed in the claims and not limited to examples described in the present specification or during the prosecution of the application, which examples are to be construed as non-exclusive. Further, the steps of the disclosed methods can be modified in any manner, including by reordering steps or inserting or deleting steps. It is intended, therefore, that he specification and examples be considered as exemplary only, with a true scope and spirit being indicated by the following claims and their full scope of equivalents.

## Claims

1. A tray apparatus for a vehicle comprising:
a vertical support;
a horizontal support connected to the vertical support and configured to extend from the vertical support; and
a tray attached to the horizontal support, wherein the tray is storable in a console next to a seat and the tray is configured to be extended to a position over the seat.

2. The tray apparatus of claim 1, wherein the tray is configured to be expandable.

3. The tray apparatus of claim 1 or claim 2, wherein the tray includes a hinge between two portions of the tray that enables the tray to expand by unfolding.

4. The tray apparatus of any one of claims 1-3, comprising:
a pivot connecting an end of the horizontal support and an end of the vertical support, wherein the pivot enables the horizontal support to move from a first position substantially parallel to the vertical support for storage to a second position substantially perpendicular to the vertical support.

5. The tray apparatus of claim 4, comprising:
a second pivot connecting a second end of the vertical support to the console, wherein the vertical support is configured to rotate downward around the second pivot into the console for storage.

6. The tray apparatus of claim 5, wherein a latch at the second end of the vertical support engages when the tray apparatus is extended to ensure the tray apparatus remains extended.

7. The tray apparatus of claim 4, comprising:
a second pivot attaching the tray to the horizontal support, wherein the tray is configured to swivel on the second pivot while remaining substantially parallel to the horizontal support.

8. The tray apparatus of any one of claims 1-7, wherein the seat is a driver seat of the vehicle and wherein the console is disposed between a passenger seat and the driver seat of the vehicle.

9. The tray apparatus of any one of claim 3-8, wherein the vehicle is configured to sense whether the tray apparatus is stored or extended and the vehicle is configured to lock the vehicle in a park state when the tray apparatus is extended.
